# EUROPÄISCHE PATENTANMELDUNG

(11) **EP 4 283 044 A1**
(43) Veröffentlichungstag der Anmeldung: **29.11.2023**
(21) Anmeldenummer: 22175360.1
(22) Anmeldetag: 25.05.2022
(51) Int. Cl.: E01C 19/48

(54) **VERFAHREN ZUM AUFHEIZEN EINER EINBAUBOHLE EINES STRASSENFERTIGERS**

(71) Anmelder: Joseph Vögele AG, 67067 Ludwigshafen (DE)
(72) Erfinder: Pontius, Johannes, 66839 Schmelz (DE); Erdtmann, Bernhard, 68535 Edingen Neckarhausen (DE)
(74) Vertreter: Grünecker Patent- und Rechtsanwälte PartG mbB

(57) **Zusammenfassung**

Verfahren zum Aufheizen einer Einbaubohle eines Straßenfertigers, das Verfahren umfassend:
- Erlangen einer vorgegebenen Zeit zur Inbetriebnahme der Einbaubohle;
- Erlangen einer Startzeit zum Beginnen des Aufheizens der Einbaubohle basierend auf der vorgegebenen Zeit;
- Automatisches Aufheizen der Einbaubohle durch Energiezufuhr zu einer Heizeinrichtung der Einbaubohle von einer Energiequelle ab der Startzeit.

## Beschreibung

Die vorliegende Erfindung betrifft ein Verfahren zum Aufheizen einer Einbaubohle eines Straßenfertigers gemäß Anspruch 1 sowie einen Straßenfertiger umfassend eine Einbaubohle und eine Steuereinheit entsprechend unabhängigem Anspruch 10.

### Stand der Technik

Straßenfertiger sind aus dem Stand der Technik hinreichend bekannt. Diese umfassen üblicherweise eine Einbaubohle, die Material für den aufzubringenden Straßenbelag aus einem Gutbunker des Straßenfertigers oder einem dem Straßenfertiger zugeordneten Gutbunker erhält und dieses Material auf den mit einem Straßenbelag zu versehenden Untergrund ausbringt. Dazu umfasst die Einbaubohle typischerweise eine oder mehrere Heizeinrichtungen, um das Material zu erwärmen oder auf einer vorgegebenen Temperatur zu halten, während dieses auf den Untergrund ausgebracht wird, so dass der Straßenbelag zuverlässig ausgebracht und angedrückt werden kann.

Dazu muss die Einbaubohle vor der Inbetriebnahme des Straßenfertigers auf die Arbeitstemperatur erwärmt werden, so dass das auszubringende Material zuverlässig auf die gewünschte Temperatur erhitzt werden kann. Dies erfordert ein zumindest teilweises Inbetriebnehmen des Straßenfertigers, bevor die eigentliche Arbeit mit dem Straßenfertiger beim Ausbringen des Materials zum Herstellen des Straßenbelags beginnen kann.

Dies macht eine genaue Planung des Betriebs der Baustelle auch unter Berücksichtigung sich ändernder Bedingungen erforderlich, was für den Bediener eines Straßenfertigers, aber auch aus ökonomischen und ökologischen Gesichtspunkten herausfordernd ist.

### Aufgabe

Ausgehend vom bekannten Stand der Technik besteht die zu lösende technische Aufgabe somit darin, das Aufheizen einer Einbaubohle eines Straßenfertigers einfacher zu gestalten und/oder ökologisch verträglicher auszuführen.

### Lösung

Diese Aufgabe wird erfindungsgemäß durch das Verfahren zum Aufheizen einer Einbaubohle eines Straßenfertigers gemäß unabhängigem Anspruch 1 sowie den Straßenfertiger umfassend eine Einbaubohle und eine Steuereinheit entsprechend unabhängigem Anspruch 10 gelöst. Vorteilhafte Weiterbildungen der Erfindung sind in den Unteransprüchen erfasst.

Das erfindungsgemäße Verfahren zum Aufheizen einer Einbaubohle eines Straßenfertigers umfasst die folgenden Schritte:
- Erlangen einer vorgegebenen Zeit zur Inbetriebnahme der Einbaubohle;
- Erlangen einer Startzeit zum Beginnen des Aufheizens der Einbaubohle basierend auf der vorgegebenen Zeit;
- Automatisches Aufheizen der Einbaubohle durch Energiezufuhr zu einer Heizeinrichtung der Einbaubohle von einer Energiequelle ab der Startzeit.

Die Schritte des Erlangens der vorgegebenen Zeit sowie der Startzeit und das Steuern des automatischen Aufheizens können grundsätzlich durch eine der Einbaubohle zugeordnete Steuereinheit oder allgemein eine (zentrale) Steuereinheit des Straßenfertigers durchgeführt werden. Die Steuereinheit kann insbesondere als Computer ausgeführt sein.

Insbesondere kann der Steuereinheit die vorgegebene Zeit zur Inbetriebnahme der Einbaubohle über eine Eingabe eines Bedieners zugeführt werden und die Steuereinheit kann dann durch weitere interne Verarbeitung der vorgegebenen Zeit die Startzeit zum Beginn des Aufheizens der Einbaubohle bestimmen. Hier können auch andere beispielsweise für den Betrieb der Einbaubohle relevante Parameter oder Umweltparameter berücksichtigt werden. Die vorgegebene Zeit ist hier als die Zeit zu verstehen, zu der mit dem Betrieb des Straßenfertigers bzw. der Einbaubohle begonnen werden kann. Das heißt also, dass mit Erreichen der vorgegebenen Zeit die Einbaubohle möglichst auf die Arbeitstemperatur, die für den normalen Betrieb der Einbaubohle erforderlich ist, aufgeheizt ist.

Die Energiezufuhr aus der Energiequelle kann insbesondere in einer Zufuhr von Strom an die Heizeinrichtung bestehen.

Die Startzeit des Aufheizens liegt erfindungsgemäß vor der vorgegebenen Zeit der Inbetriebnahme und wird insbesondere so gewählt, dass mit Erreichen der vorgegebenen Zeit zur Inbetriebnahme der Einbaubohle das Aufheizen der Aufbaubohle gerade abgeschlossen ist.

Dies ist insbesondere so zu verstehen, dass basierend auf der vorgegebenen Zeit die Startzeit so bestimmt wird, dass der zeitliche Abstand der Startzeit und der vorgegebenen Zeit gerade so groß ist, dass die Einbaubohle von ihrer Temperatur an der Startzeit mit den gewählten Parametern für das Aufheizen der Einbaubohle automatisch von der ursprünglichen Temperatur zur Startzeit zu der Zieltemperatur bzw. Arbeitstemperatur mit Erreichen der vorgegebenen Zeit erwärmt werden kann. Es kann auch vorgesehen sein, dass die Startzeit so gewählt wird, dass die Zieltemperatur bzw. Arbeitstemperatur der Einbaubohle innerhalb eines Zeitraums von ± 10 Minuten, oder ± 15 Minuten, oder ± 30 Minuten um die vorgegebene Zeit erreicht wird.

Grundsätzlich erlaubt in bevorzugten Ausführungsformen das erfindungsgemäße Verfahren ein Aufheizen der Einbaubohle möglichst derart, dass ein Zeitintervall, bei dem die Einbaubohle nicht im tatsächlichen Betrieb ist (also Material auf den Untergrund zum Fertigen eines Straßenbelags ausbringt), aber dennoch auf der gewünschten Arbeitstemperatur betrieben wird, möglichst klein ist. Bevorzugt erreicht die Einbaubohle die Arbeitstemperatur höchstens 20min, bevorzugt höchstens 10min vor der vorgegebenen Zeit. Wird die Startzeit so gewählt, dass die Arbeitstemperatur eine Zeitspanne (wie beispielsweise 20min oder 10min) vor der vorgegebenen Zeit erreicht wird, kann dies auch als zeitlicher Puffer dienen, um etwa sich ändernde Umweltbedingungen (beispielsweise plötzlicher Regen innerhalb des Zeitintervalls zwischen Startzeit und vorgegebener Zeit), die negativen Einfluss auf die für das Aufheizen der Einbaubohle nötige Zeit haben, zu kompensieren und ein Erreichen der Arbeitstemperatur mit Erreichen der vorgegebenen Zeit zu gewährleisten.

Dadurch wird Energie gespart, so dass dieses Verfahren ökologisch und/oder ökonomisch verträglicher ist.

Gleichzeitig kann so der Betrieb der Einbaubohle für einen Bediener vereinfacht werden, da eine vorhergehende Planung des Aufheizens nicht länger vom Bediener durchgeführt werden muss.

Weiterhin kann vorgesehen sein, dass die Energiequelle ein mit einem Primärantrieb des Straßenfertigers verbundener Akkumulator oder eine mit dem Primärantrieb des Straßenfertigers verbundene Brennstoffzelle oder der Primärantrieb des Straßenfertigers oder eine mit dem Straßenfertiger verbundene, externe Energiequelle ist oder diese umfasst.

Insbesondere in Ausführungsformen des Straßenfertigers als elektrisches Fahrzeug oder hybrid angetriebenes Fahrzeug oder Brennstoffzellenfahrzeug kann vorgesehen sein, dass die Verbindung der Energiequelle (also des Akkumulators oder der Brennstoffzelle) mit der Einbaubohle zur Energiezufuhr ohne Aktivierung des Primärantriebs erfolgt. Damit wird also direkt Energie aus der Brennstoffzelle oder dem Akkumulator als elektrische Energie zum Aufwärmen bzw. Aufheizen der Einbaubohle genutzt, ohne dass zusätzlich Energie über den zu dieser Zeit nicht verwendeten Primärantrieb des Straßenfertigers verbraucht wird. Da die Umwandlung von in solchen Energiequellen gespeicherter Energie ohne Betrieb des Primärantriebs möglich ist, sind diese Ausführungsformen ökologisch und/oder wirtschaftlich besonders vorteilhaft. Als externe Energiequelle kann beispielsweise ein Anschluss der Einbaubohle oder der Heizeinrichtung der Einbaubohle an ein zur Verfügung stehendes öffentliches Stromnetz dienen.

In einer Ausführungsform erfolgt das Erlangen der Startzeit weiterhin basierend auf einem gemessenen Umweltparameter. Der Umweltparameter kann dabei insbesondere wenigstens eines von Umgebungstemperatur, Luftfeuchtigkeit, Niederschlagsmenge pro Zeiteinheit, Helligkeit umfassen.

Mit diesen Ausführungsformen können Umwelteinflüsse, die das notwendige Zeitintervall zum Aufheizen der Einbaubohle negativ oder positiv beeinflussen können, beim Bestimmen der vorgegebenen Zeit berücksichtigt werden. Sind beispielsweise die Umgebungstemperaturen vergleichsweise hoch (beispielsweise über 25°C oder über 30°C), so ist weniger Energie und/oder weniger Zeit für das Aufheizen der Einbaubohle erforderlich, so dass die Startzeit in geringerem zeitlichen Abstand zur vorgegebenen Zeit bestimmt werden kann. Ist die Umgebungstemperatur niedriger (beispielsweise nur 10°C oder unter 0°C), ist mehr Zeit zum Aufheizen der Einbaubohle erforderlich, so dass der Abstand zwischen Startzeit und vorgegebener Zeit entsprechend größer gewählt werden kann bzw. muss.

Die Umweltparameter können über entsprechende Sensoren, die mit der Einbaubohle und/oder dem Straßenfertiger verbunden sein können, gemessen werden. So kann ein Feuchtigkeitssensor, Regensensor und/oder Temperatursensor (beispielsweise in Form eines elektronischen Thermometers) genutzt werden, wie sie grundsätzlich bereits bekannt sind.

Weiterhin kann das Erlangen der Startzeit basierend auf einem gemessenen Abkühlparameter und/oder Aufheizparameter der Einbaubohle erfolgen.

Diese Ausführungsform kann mit den vorher genannten Ausführungsformen zum Erlangen der Startzeit basierend auf gemessenen Umweltparametern kombiniert werden, kann jedoch auch alternativ hierzu vorgesehen sein.

Bei dem Abkühlparameter und/oder dem Aufheizparameter kann es sich bevorzugt um eine einzige Zahl oder einen einzigen Wert handeln, mit dem beispielsweise die Wärmeübertragung von der Einbaubohle an die Umgebung charakterisierende Parameter zusammengefasst werden können, um beispielsweise das Abkühlverhalten, aber auch das Verhalten beim Aufnehmen von Wärme und damit das Erwärmverhalten der Einbaubohle näherungsweise zu bestimmen. Mit dieser Ausführungsform kann das Verhalten der Einbaubohle beim Bestimmen der Startzeit berücksichtigt werden, was ein Aufheizen der Einbaubohle bis zur vorgegebenen Zeit zuverlässig gewährleisten kann.

Insbesondere kann der gemessene Abkühlparameter durch Aufheizen der Einbaubohle auf eine vorgegebene Test-Temperatur und anschließendes Ermitteln eines mit einem Abkühlen der Einbaubohle assoziierten Parameters ermittelt werden und/oder der gemessene Aufheizparameter kann durch Aufheizen der Einbaubohle auf eine vorgegebene Test-Temperatur und anschließendes Ermitteln eines mit dem Aufheizen der Einbaubohle assoziierten Parameters ermittelt werden. Über dieses Verfahren lässt sich der Abkühlparameter und/oder Aufheizparameter technisch einfach bestimmen. Ferner können so mit einem einzigen Aufheizen auf die Test-Temperatur beide Parameter bestimmt werden, was das Auftreten systematischer und/oder zufälliger Fehler beim Bestimmen des Abkühlparameters und/oder des Aufheizparameters minimieren kann.

In einer Ausführungsform wird das Automatische Aufheizen von einer Steuereinheit der Einbaubohle nur dann aktiviert wird, wenn die Steuereinheit ein für ein Positionieren eines Sicherheitselements indikatives Signal empfängt. Die Steuereinheit kann eine separate Steuereinheit (etwa Computer) sein, der nur der Einbaubohle zugeordnet ist. Es kann sich bei der Steuereinheit aber auch um die Steuereinheit des Straßenfertigers handeln.

Hiermit kann sichergestellt werden, dass die Umgebungsbedingungen für das Aufheizen der Einbaubohle trotz Abwesenheit eines Bedieners bestimmten Anforderungen entsprechen, beispielsweise, dass die Einbaubohle horizontal steht oder dass die Einbaubohle durch nicht brennendes Material von der Umgebung abgeschirmt ist. Dies verbessert die Betriebssicherheit.

Insbesondere kann vorgesehen sein, dass das Sicherheitselement ein nicht brennbares Material und/oder ein wärmeisolierendes Material umfasst. Die Verwendung von nicht brennbarem und insbesondere wärmeisolierendem Material unter oder um die Einbaubohle kann das Erwärmen bzw. Aufheizen der Einbaubohle sicherer realisieren und gleichzeitig oder alternativ ökologisch und ökonomisch besser vertretbar sein.

Ferner kann vorgesehen sein, dass das Erlangen der vorgegebenen Zeit basierend auf einer Eingabe an einem Bedienelement des Straßenfertigers und/oder basierend auf einer Eingabe einer mit einer Steuereinheit der Einbaubohle über eine drahtlose Verbindung verbundenen Eingabeeinrichtung erfolgt. Der Nutzer kann insbesondere über eine Applikation auf einem mobilen Endgerät, wie einem Smartphone, dem Straßenfertiger oder der Steuereinheit des Straßenfertigers über beispielsweise eine drahtlose Verbindung wie das mobile Internet (4G, LTE o. Ä.) die vorgegebene Zeit mitteilen, so dass die Steuereinheit dann daraus die Startzeit bestimmen kann. Dies erlaubt dem Bediener eine vereinfachte Steuerung der Einbaubohle.

Der erfindungsgemäße Straßenfertiger umfasst eine Einbaubohle und eine Steuereinheit, wobei die Einbaubohle und die Steuereinheit zur Ausführung eines Verfahrens zum Aufheizen der Einbaubohle ausgebildet sind, das Verfahren umfassend:
- Erlangen einer vorgegebenen Zeit zur Inbetriebnahme der Einbaubohle;
- Erlangen einer Startzeit zum Beginnen des Aufheizens der Einbaubohle basierend auf der vorgegebenen Zeit;
- Automatisches Aufheizen der Einbaubohle durch Energiezufuhr zu einer Heizeinrichtung der Einbaubohle von einer Energiequelle ab der Startzeit.

Dieser Straßenfertiger kann ein ökonomisch und/oder ökologisch verträglicheres Aufheizen der Einbaubohle realisieren und gleichzeitig erhöhten Bedienkomfort für einen Bediener bereitstellen.

Es kann auch vorgesehen sein, dass die Energiequelle ein mit einem Primärantrieb des Straßenfertigers verbundener Akkumulator oder eine mit dem Primärantrieb des Straßenfertigers verbundene Brennstoffzelle oder der Primärantrieb des Straßenfertigers oder eine mit dem Straßenfertiger verbundene, externe Energiequelle ist oder diese umfasst. Die Verwendung eines Akkumulators oder einer Brennstoffzelle erlaubt das Zuführen von Energie an die Heizeinrichtung (beispielsweise Strom), ohne dass der Primärantrieb aktiviert sein muss, was ebenfalls das Aufheizen der Einbaubohle aus ökonomischen und/oder ökologischen Gesichtspunkten effizienter gestalten kann.

In einer Ausführungsform umfasst der Straßenfertiger einen Sensor zum Messen eines Umweltparameters und die Steuereinheit ausgebildet ist, die Startzeit basierend auf dem gemessenen Umweltparameter zu bestimmen. Das Bestimmen der Startzeit kann somit zuverlässiger erfolgen, was hinsichtlich ökonomischer und/oder ökologischer Faktoren vorteilhaft sein kann.

Weiterhin kann die Steuereinheit ausgebildet sein, die Startzeit basierend auf einem in einem Speicher der Steuereinheit gespeicherten Abkühlparameter der Einbaubohle zu Bestimmen. Hiermit kann dem thermischen Verhalten der Einbaubohle Rechnung getragen werden, was erlaubt, das Aufheizen der Einbaubohle energetisch effizienter durchzuführen.

In einer Ausführungsform ist die Steuereinheit ausgebildet, das Aufheizen der Einbaubohle nur dann zu aktivieren, wenn die Steuereinheit ein für ein Positionieren eines Sicherheitselements indikatives Signal empfängt. Das Sicherheitselement kann insbesondere ein nicht brennbares Material und/oder ein wärmeisolierendes Material umfassen. Hiermit kann das Aufheizen der Einbaubohle energetisch vorteilhaft ausgeführt werden und gleichzeitig sicherer gestaltet werden.

### Kurze Beschreibung der Figuren

- Fig. 1: zeigt eine schematische Ansicht eines Straßenfertigers mit einer Einbaubohle gemäß einer Ausführungsform
- Fig. 2: zeigt ein Fließschema eines Verfahrens zum Aufheizen einer Einbaubohle eines Straßenfertigers gemäß einer Ausführungsform
- Fig. 3: zeigt ein Fließschema eines Verfahrens zum Bestimmen eines Abkühlparameters der Einbaubohle gemäß einer Ausführungsform

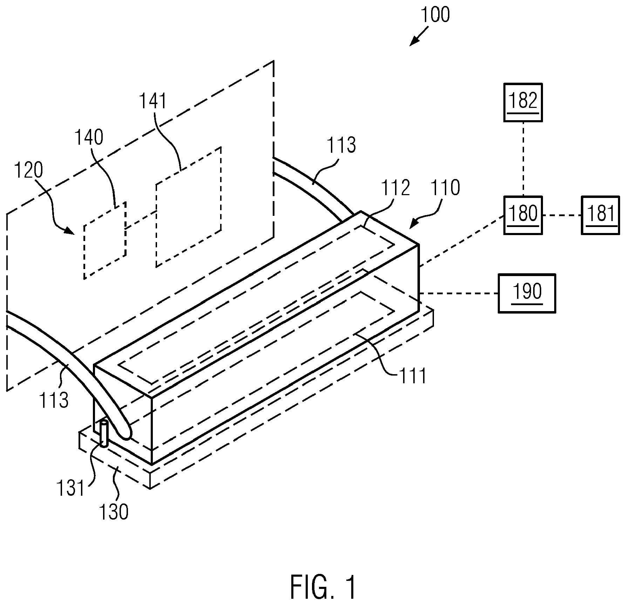

Fig. 1 zeigt einen Straßenfertiger 100 mit einer Einbaubohle 110 gemäß einer Ausführungsform der Erfindung. Der Straßenfertiger 100 umfasst bekanntermaßen ein Zugfahrzeug 120 oder Triebfahrzeug 120, mit dem eine Einbaubohle 110 verbunden ist. Die Einbaubohle 110 kann beispielsweise über die hier dargestellten Verbindungselemente 113, die insbesondere als Nivellierzylinder ausgestaltet sein können, um beispielsweise Unebenheiten des Untergrunds beim Ausbringen des Straßenbelags mittels der Einbaubohle 110 zu kompensieren, mit dem Zugfahrzeug 120 verbunden sein. Die Verbindungselemente 113 können jedoch auch als starre Verbindungselemente ausgestaltet sein.

Das Zugfahrzeug 120 umfasst üblicherweise einen Primärantrieb 140. Dieser Primärantrieb kann beispielsweise als ein Verbrennungsmotor (Dieselmotor oder Benzinmotor) ausgestaltet sein. In alternativen und bevorzugten Ausführungsformen kann es sich bei dem Primärantrieb 140 auch um einen Elektromotor oder um einen Hybridantrieb oder um einen Brennstoffzellenantrieb handeln.

Im Falle eines elektrischen oder hybriden Primärantriebs oder eines Brennstoffzellenantriebs 140 kann eine "Energiequelle" 141 in Form eines Akkumulators oder einer Brennstoffzelle 141 bereitgestellt sein, die mit dem Primärantrieb 140 verbunden ist, so dass beispielsweise aus dem Ackumulator oder der Brennstoffzelle Energie an den Primärantrieb überführt werden kann. Im Falle eines Akkumulators handelt es sich dabei um elektrische Energie, so dass der Elektromotor des elektrischen Straßenfertigers 100 bzw. der Elektromotor eines hybridangetriebenen Straßenfertigers 100 als Primärantrieb 140 mit Strom versorgt werden kann.

Ist der Primärantrieb als Verbrennungsmotor ausgestaltet, so kann die Energiequelle als Tank für Kraftstoff (etwa Benzin oder Diesel) ausgestaltet sein.

Es kann vorgesehen sein, dass die Energiequelle in Form der Brennstoffzelle und/oder des Ackumulators 141 ebenfalls mit einer Heizeinrichtung 112 der Einbaubohle 110 unabhängig von der Verbindung der Energiequelle mit dem Primärantrieb 140 verbunden ist, so dass bevorzugt ohne Aktivierung oder Energiezufuhr an den Primärantrieb 140 die Heizeinrichtung 112 der Einbaubohle 110 mit Energie versorgt werden kann. Alternativ kann auch eine Verbindung der Heizeinrichtung der Einbaubohle nur mit dem Primärantrieb 140 erfolgen, sodass die Energiezufuhr an die Heizeinrichtung der Einbaubohle über den Betrieb des Primärantriebs erfolgt.

Die Heizeinrichtung 112 kann zum Aufheizen und auch zum Betreiben der Einbaubohle 110 verwendet werden. Dazu kann die Einbaubohle 110 von der Heizeinrichtung 112 zunächst auf eine gewünschte Temperatur (im Folgenden auch Betriebstemperatur) aufgeheizt werden. Dies kann insbesondere das Aufheizen eines Glättbleches 111 der Einbaubohle 110 umfassen. Das Glättblech 111 wird bekanntermaßen dazu verwendet, einen auf den Untergrund ausgebrachten Straßenbelag durch Andrücken und Erwärmen gleichmäßig zu verteilen und auf den Untergrund aufzubringen. Die Heizeinrichtung kann dieses Glättblech aber auch weitere Komponenten der Einbaubohle auf eine gewünschte Betriebstemperatur erwärmen.

Es kann dabei vorgesehen sein, dass der Einbaubohle 110 und/oder dem Straßenfertiger 100 eine Steuereinheit 180 (beispielsweise in Form eines Computers) zugeordnet ist. Die Steuereinheit 180 kann einen Speicher 181 für Daten umfassen oder ihr kann ein solcher zugeordnet sein. Beispielsweise kann dieser Speicher 181 als interne Festplatte eines Computers, der die Steuereinheit 180 realisiert, ausgestaltet sein. Alternativ oder zusätzlich kann auch ein Speicher 181 in Form eines (wechselbaren) nichtflüchtigen Speichers (beispielsweise eines USB-Sticks) realisiert sein. Der Steuereinheit 180 kann weiterhin ein Bedienelement 182, beispielsweise in Form einer Tastatur oder eines Touchscreens oder eines über eine drahtlose Verbindung mit der Steuereinheit verbundenen mobilen Endgeräts (etwa ein Smartphone), zugeordnet sein, über das ein Bediener der Steuereinheit Informationen eingeben kann.

In der hier dargestellten Ausführungsform ist weiterhin ein Sicherheitselement 130 gezeigt. Dieses Sicherheitselement kann als nicht brennbares Element und/oder als wärmeisolierendes Element oder beides ausgestaltet sein oder solche Elemente umfassen und beispielsweise unterhalb einer Einbaubohle positioniert werden oder (beispielsweise bei Ausgestaltung als eine Vielzahl von Matten) die Einbaubohle möglichst vollständig umgeben, beispielsweise wenigstens 50% oder wenigstens 80% der äußeren Oberfläche der Einbaubohle bedecken. Hierdurch kann insbesondere während eines Aufheizens der Einbaubohle ein Inbrandgeraten der Einbaubohle und der Umgebung vermieden werden, was das Unfallrisiko minimiert.

Wird in dem oder den Sicherheitselementen 130 weiterhin ein wärmeisolierendes Material verwendet, so kann zumindest durch die Sicherheitselemente 130 hindurch eine Wärmeabgabe von der Einbaubohle an die Umgebung zumindest während eines Aufheizens der Einbaubohle 110 reduziert oder vermieden werden, was die energetische Effizienz beim Aufheizen der Einbaubohle über die benötigte Zeit zum Aufheizen der Einbaubohle reduzieren kann. Als Elemente kommen hier beispielsweise Elemente mit geringem Wärmeleitkoeffizient, wie etwa Gummi oder Polyurethan oder Schäume in Betracht. Die Ausführungsformen sind jedoch nicht auf diese Materialien beschränkt. Grundsätzlich kann hier jedes Material oder Materialkombination, das wärmeisolierende Eigenschaften besitzt und bevorzugt einen geringeren Wärmeleitkoeffizient als das Material der Einbaubohle aufweist, genutzt werden. So können auch Schichtstrukturen beispielsweise umfassend eine Keramik und ein weiteres Material genutzt werden.

In einer Ausführungsform kann vorgesehen sein, dass die Steuereinheit 180, die nachfolgend beschrieben wird, das Aufheizen der Einbaubohle nur dann durchführt, wenn das oder die Sicherheitselemente 130 korrekt positioniert sind. Um dies zu gewährleisten, kann vorgesehen sein, dass ein Sicherheitsschalter 130 lediglich bei korrekter Positionierung des Sicherheitselements 130 automatisch geschlossen wird und/oder (manuell) geschlossen werden kann. Der Sicherheitsschalter 131 kann beispielsweise als ein elektrischer oder elektronischer Schalter ausgeführt sein, der bei korrekter Positionierung des Sicherheitselements 130 relativ zur Einbaubohle 110 geschlossen wird (beispielsweise indem ein Verbindungselement des Sicherheitselements 130 mit einem Verbindungselement der Einbaubohle in Verbindung tritt). Nur dann kann das Element 131 ein entsprechendes elektrisches oder elektronisches Signal an die Steuereinheit 180 übermitteln, die dann basierend auf diesem Signal, das indikativ für das korrekte Positionieren eines Sicherheitselements 130 relativ zur Einbaubohle 110 ist, ein Aufheizen der Einbaubohle freigeben kann. Das Aufheizen kann dann entsprechend den nachfolgenden Ausführungsformen bewirkt werden.

Der Straßenfertiger kann weiterhin wenigstens einen Sensor 190 zum Messen eines oder mehrerer Umweltparameter umfassen. Der Sensor 190 kann beispielsweise als Sensor zum Messen der Umgebungsfeuchtigkeit, von Niederschlag (Regen oder Schnee), Helligkeit und/oder Temperatur ausgestaltet sein.

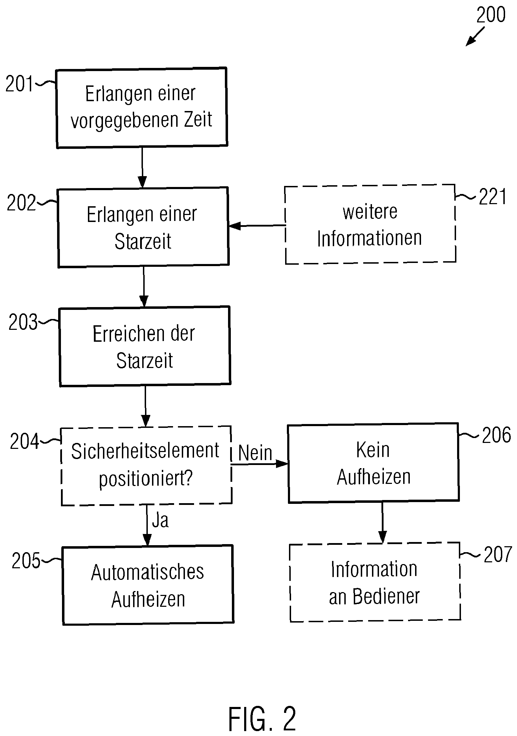

Fig. 2 zeigt ein Fließschema eines Verfahren zum Aufheizen einer Einbaubohle gemäß einer Ausführungsform.

Das Verfahren 200 entsprechend der Fig. 2 beginnt mit einem ersten Schritt 201, bei dem die Steuereinheit 180 eine vorgegebene Zeit, zu der die Einbaubohle auf eine gewünschte Temperatur erwärmt werden soll bzw. zu der die Einbaubohle final in Betrieb genommen werden soll, erlangt. Das Erlangen dieser vorgegebenen Zeit in Schritt 201 kann beispielsweise basierend auf einer Zeitschaltuhr auch wiederholt erfolgen. So kann beispielsweise der Steuereinheit durch einen Bediener einmalig mitgeteilt werden, dass die Einbaubohle zu bestimmten Zeiten an bestimmten Tagen auf die gewünschte Betriebstemperatur zur Inbetriebnahme der Einbaubohle aufgeheizt sein soll. Beispielsweise kann die Steuereinheit in den Speicher 181 hinterlegte Informationen umfassen, wonach die Einbaubohle werktags von Montag bis Freitag jeweils ab 8 Uhr betriebsbereit sein muss also insbesondere die Einbaubohle auf die Betriebstemperatur aufgeheizt sein muss. Das Aufheizen der Einbaubohle muss zu dieser Zeit also bereits abgeschlossen sein.

Alternativ oder zusätzlich kann auch vorgesehen sein, dass ein Bediener der Einbaubohle etwa über Eingabe mittels eines Bedienelements 182 (etwa einer Tastatur), das der Steuereinheit zugeordnet ist, der Steuereinheit die vorgegebene Zeit eingeben kann.

Alternativ oder zusätzlich kann die Steuereinheit 180 die vorgegebene Zeit auch beispielsweise über die Eingabe der entsprechenden Information auf einem mobilen Endgerät, insbesondere einem Smartphone, als Bedienelement 182 erhalten. In diesem Fall kann auf dem mobilen Endgerät (also etwa dem Smartphone) 182 eine entsprechende Applikation oder "App" gespeichert sein, die den Remote-Zugriff auf die Steuereinheit 180 des Straßenfertigers erlaubt. Dieser Zugriff kann beispielsweise über eine verschlüsselte Verbindung (VPN-Verbindung o. Ä.) realisiert werden, so dass ein unerlaubtes Zugreifen auf die Steuereinheit 180 des Straßenfertigers nicht möglich ist.

Weiterhin alternativ oder zusätzlich kann die Steuereinheit die vorgegebene Zeit aus einem dem straßenfertiger zugeordneten oder auch in die Steuereinheit 180 integrierten Baustellenmanagementsystem erlangen. Im Baustellenmanagementsystem können beispielsweise Informationen über die geplante Ankunft von Mischgut-LKWs an der Baustelle bzw. am Straßenfertiger gespeichert oder über dieses abrufbar sein. Die Steuereinheit kann dann beispielsweise die vorgegebene Zeit als die geplante Ankunftszeit eines nächsten Mischgut-LKW erlangen.

Nachdem die vorgegebene Zeit in Schritt 201 erlangt wurde, kann die Steuereinheit im Schritt 202 eine Startzeit zum Beginnen des Aufheizens der Einbaubohle basierend auf der im Schritt 201 erlangten vorgegebenen Zeit bestimmen. Dies kann in einer Ausführungsform umfassen, dass die Startzeit stets ein vorgegebenes Zeitintervall vor der vorgegebenen Zeit gesetzt wird. So kann die Steuereinheit automatisch, etwa basierend auf in dem Speicher 181 hinterlegten Informationen, die Startzeit 30 Minuten vor der vorgegebenen Zeit festlegen. Zu diesem Zeitpunkt kann dann mit dem Aufheizen der Einbaubohle begonnen werden, so dass diese etwa bis zum Erreichen der vorgegebenen Zeit auf die gewünschte Betriebstemperatur gebracht werden kann.

In anderen Ausführungsformen werden im Schritt 202 auch weitere Informationen 221 genutzt, um die Startzeit zu bestimmen. Die weiteren Informationen können beispielsweise über den Sensor 190 des Straßenfertigers erlangt werden. So kann der Sensor die Temperatur und/oder Luftfeuchtigkeit und/oder Niederschlagsmenge und/oder Helligkeit messen und aus den so gewonnenen Umweltparametern kann die Startzeit auch unter Berücksichtigung der vorgegebenen Zeit bestimmt werden. Ist beispielsweise die Umgebungstemperatur vergleichsweise hoch (etwa 30 °C oder höher), so kann mit dem Aufheizen der Einbaubohle zu einem späteren Zeitpunkt begonnen werden (zeitlich weniger weit von der vorgegebenen Zeit entfernt) als bei einer Umgebungstemperatur von -3 °C. Auch Informationen zu Luftfeuchtigkeit und/oder Niederschlägen sowie zur Helligkeit können genutzt werden, um die Startzeit basierend auf der vorgegebenen Zeit unter zusätzlicher Berücksichtigung dieser Umweltparameter zu bestimmen.

Ferner können Informationen des Baustellenmanagementsystems, wie es bereits für das Erlangen der vorgegebenen Zeit diskutiert wurde, genutzt werden, um die Startzeit zu erlangen. So kann das Baustellenmanagementsystem über Wetterinformationen aktuell und/oder für einen zukünftigen Zeitraum verfügen. Insbesondere basierend auf (wahrscheinlich) zu erwartendem Wetter zu der vorgegebenen Zeit (beispielsweise am Morgen des nächsten Tages, wenn die Einbaubohle wieder in Betrieb genommen werden muss) und/oder einen Zeitraum davor, beispielsweise eine Stunde oder zwei Stunden oder drei Stunden vor der vorgegebenen Zeit, kann die Startzeit bestimmt werden. Sind beispielsweise zu der vorgegebenen Zeit und/oder während einer Stunde vor der vorgegebenen Zeit niedrige Temperaturen (etwa -3°C) und/oder Niederschläge zu erwarten, so kann die Startzeit früher festgelegt werden als in einem Fall, in dem höhere Temperaturen und/oder kein Niederschlag zu erwarten sind, sodass mehr Zeit für das Aufheizen der Einbaubohle zur Verfügung steht.

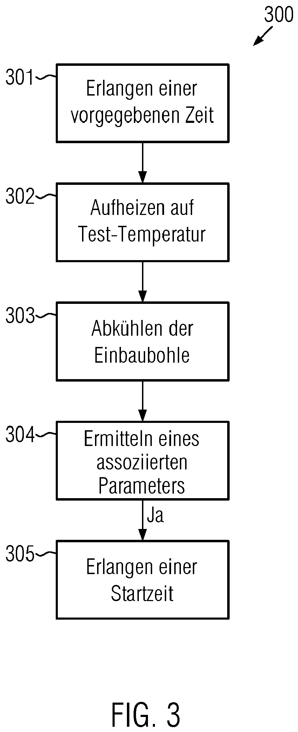

Alternativ oder zusätzlich kann auch die Startzeit basierend auf einem Abkühlparameter der Einbaubohle, der etwa basierend auf dem in Fig. 3 beschriebenen Verfahren bestimmt werden kann, ermittelt werden.

Nachdem die Startzeit erlangt wurde, kann vorgesehen sein, dass bis zum Erreichen der Startzeit keine weiteren automatischen Aktionen durchgeführt werden. Mit Erreichen der Startzeit im Schritt 203 kann beispielsweise geprüft werden, ob das in Bezug auf Fig. 1 beschriebene Sicherheitselement korrekt positioniert ist (Schritt 204). Dies ist lediglich optional und ist bevorzugt nur vorgesehen, wenn auch ein entsprechendes Sicherheitselement 130 bereitgestellt ist.

Falls das Sicherheitselement nicht korrekt positioniert ist, so gibt die Steuereinheit das Aufheizen der Einbaubohle nicht frei, wie dies bereits in Bezug auf Fig. 1 beschrieben wurde. Es erfolgt dann also kein Aufheizen 206. Stattdessen kann optional eine entsprechende Information beispielsweise an die Applikation auf dem mobilen Endgerät des Bedieners oder an einen Bildschirm des Bedienelements 182 in Schritt 207 übersandt werden, so dass der Bediener darüber informiert wird, dass das Aufheizen der Einbaubohle nicht begonnen wurde.

Basierend auf dieser Information, die beispielsweise als optische oder akustische Mitteilung an den Bediener ausgegeben werden kann, kann der Bediener dann beispielsweise angewiesen werden, das Sicherheitselement korrekt zu positionieren. Alternativ oder zusätzlich kann dem Bediener eine Option zum Autorisieren des Beginns des Aufheizens des Straßenfertigers auch ohne korrekt positioniertes Sicherheitselement angezeigt werden. Bestätigt der Bediener dies, so kann das Aufheizen durch die Steuereinheit freigegeben werden, obwohl das Sicherheitselement nicht korrekt positioniert ist.

Ist das Sicherheitselement korrekt positioniert oder findet eine Prüfung dahingehend im Schritt 204 nicht statt, so erfolgt anschließend das automatische Aufheizen der Einbaubohle durch Energiezufuhr zur Heizeinrichtung beispielsweise aus dem Akkumulator des Straßenfertigers 141, wie dies mit Bezug auf die Fig. 1 bereits beschrieben wurde.

Die Fig. 3 zeigt ein weiteres Verfahren 300, das alternativ zu den Schritten 202 und 221 oder in Kombination damit durchgeführt werden kann.

Dieses Verfahren beginnt mit dem Schritt 301, in dem eine vorgegebene Zeit erlangt wird, zu der die Einbaubohle auf eine gewünschte Betriebstemperatur aufgeheizt sein soll.

Anschließend wird die Einbaubohle auf eine Test-Temperatur aufgeheizt. Diese Test-Temperatur ist bevorzugt geringer als die Betriebstemperatur der Einbaubohle und kann beispielsweise ein Erwärmen ausgehend von einer aktuellen Temperatur der Einbaubohle um eine bestimmte Anzahl Kelvin umfassen, die unabhängig von der Betriebstemperatur der Einbaubohle ist. Beispielsweise kann ein Aufheizen der Einbaubohle um 10 K oder 20 K oder 30 K erfolgen. Auch andere Werte sind denkbar, solange eine zuverlässige Ermittlung des im Schritt 304 noch zu beschreibenden, mit der Abkühlung der Einbaubohle assoziierten Parameters möglich ist. Alternativ kann auch vorgesehen sein, dass die Einbaubohle auf eine stets gleiche Test-Temperatur erwärmt wird, die auch unabhängig von der aktuellen Temperatur der Einbaubohle und/oder der Umgebungstemperatur ist. Diese Test-Temperatur kann beispielsweise 60°C betragen.

Nachdem im Schritt 302 die Einbaubohle auf die Test-Temperatur erwärmt wurde, wird die Heizeinrichtung der Einbaubohle abgeschaltet und es erfolgt im Schritt 303 ein Abkühlen der Einbaubohle. Dieses Abkühlen wird, ohne dass die Heizeinrichtung wieder eingeschaltet wird, letztlich ein Abkühlen der Einbaubohle bis auf die Umgebungstemperatur bewirken.

Das Abkühlen der Einbaubohle auf die Umgebungstemperatur und insbesondere der zeitliche Verlauf dieses Abkühlvorgangs hängt von physikalischen Parametern der Einbaubohle ab. Insbesondere entspricht die in der Einbaubohle bei der Test-Temperatur T vorhandene Wärmemenge Q = α·T, wobei T die absolute Temperatur ist und α allgemein die Wärmekapazität der Einbaubohle angibt (in J/K). Im einfachsten Fall, in dem die Einbaubohle aus genau einem Material besteht, das die gesamte Masse der Einbaubohle darstellt, wäre α = c·m mit c als spezifischer Wärmekapazität und m als Masse der Einbaubohle.

Da die Einbaubohle aber aus unterschiedlichen Komponenten und insbesondere unterschiedlichen Materialien besteht, ist die Wärmekapazität α im Allgemeinen komplizierter, insbesondere eine Summe der Produkte von spezifischer Wärmekapazität und Masse der einzelnen Bestandteile/Komponenten der Einbaubohle aufweisen. Es ist jedoch im Rahmen der Erfindung erkannt worden, dass es für das Aufheizen der Einbaubohle nicht erforderlich ist, den Beitrag jeder Komponente der Einbaubohle zur Wärmekapazität zu bestimmen, sondern nur die Wärmekapazität der Einbaubohle insgesamt bestimmt werden muss.

Da der Verlauf der Temperatur der Einbaubohle bei Abkühlung abhängig von der Zeit, T(t), proportional zu e^{-k(α)t}, *T*(*t*) = (*T*₀ - *Tᵤ*)*e*^{*-k*(*α)t*} + *Tᵤ* (mit T₀ als Test-Temperatur und Tᵤ als Umgebungstemperatur) ist, lässt sich aus dem Abkühlverhalten und insbesondere dem Verlauf der Temperatur über die Zeit ein Rückschluss auf die physikalischen Eigenschaften der Einbaubohle zumindest numerisch ziehen. Der mit dem Abkühlen assoziierte Parameter k(a) lässt sich so bestimmen. Dies erfolgt im Schritt 304 beispielsweise nachdem der Temperaturverlauf der Einbaubohle, etwa über einen internen Temperatursensor, der mit der Steuereinheit verbunden sein kann, gemessen wurde. Im Schritt 304 kann aus dieser Messung entweder der Parameter k(a) als ein mit dem Abkühlverhalten assoziierter Parameter (auch Abkühlparameter genannt) der Einbaubohle bestimmt werden oder es kann aus dem Parameter k(a) die Wärmekapazität α der Einbaubohle gewonnen werden. Dies kann erfolgen, indem zusätzlich die abgegebene Wärmemenge bestimmt wird, die während des Abkühlvorgangs von der Einbaubohle abgegeben wird.

So kann das Verhalten der Einbaubohle beim Abkühlen und insbesondere die Temperatur zu unterschiedlichen Zeiten nach Abschalten der Heizeinrichtung gemessen werden, um den obigen exponentiellen Verlauf anschließend numerisch auszuwerten. Beispielsweise kann die Temperatur der Einbaubohle alle 30 Sekunden über einen Zeitraum von 20 Minuten nach dem Abschalten der Heizeinrichtung am Ende des Schritts 302 gemessen werden.

Der im Schritt 304 so ermittelte, mit dem Abkühlen der Einbaubohle assoziierte Parameter k(a) oder α kann anschließend im Schritt 305 verwendet werden (etwa auch in Kombination mit weiteren Informationen, wie der Umgebungstemperatur und der zu erreichenden Betriebstemperatur der Einbaubohle), um die Startzeit auch basierend auf der im Schritt 301 vorgegebenen Zeit zu bestimmen. In die Bestimmung der Startzeit kann grundsätzlich auch in allen beschriebenen Ausführungsformen die Leistung der Heizeinrichtung einfließen, da diese die der Einbaubohle zuführbare Wärmemenge pro Zeiteinheit festlegt.

Dies kann vorteilhaft genutzt werden, um die Startzeit so zu wählen, dass bei gegebener Umgebungstemperatur und zu erreichender Betriebstemperatur der Einbaubohle die Startzeit möglichst nur so lange vor der vorgegebenen Zeit liegt, dass ein Aufheizen der Einbaubohle in dem sich ergebenden Zeitintervall bis zur Betriebstemperatur möglichst mit Erreichen der vorgegebenen Zeit erreicht wird. Und damit können "Leerlaufzeiten", in denen die Einbaubohle zwar auf die notwendige Betriebstemperatur aufgeheizt wurde, aber die vorgegebene Zeit noch nicht erreicht wurde, vermieden werden, was aus ökologischen und ökonomischen Gesichtspunkten vorteilhaft ist.

Anstelle der Bestimmung eines mit dem Abkühlen assoziierten Parameters basierend auf dem Aufheizen auf die Test-Temperatur und dem anschließenden Abkühlen in den Schritten 302 und 303 kann auch vorgesehen sein, dass ein mit dem Aufheizen assoziierter Parameter mit dem verfahren entsprechend Fig. 3 bestimmt wird. Auch dieser kann dann beim Erlangen der Startzeit im Schritt 305 genutzt werden.

In dieser Ausführungsform erfolgt eine Messung beispielsweise der Temperatur der Einbaubohle während des Aufheizens auf die Test-Temperatur im Schritt 302. Dies kann entsprechend obiger Beschreibung beispielsweise alle 30 Sekunden über den Zeitraum, während dem die Einbaubohle von der Umgebungstemperatur Tᵤ auf die Test-Temperatur T₀ aufgeheizt wird, gemessen werden. Im diesem Fall kann analog über die Beziehung *T*(*t*) = (*Tᵤ* - *T*₀)*e*^{*-k*(*α*)*t*} + *T*₀ (mit T₀ als Test-Temperatur und Tᵤ als Umgebungstemperatur) dann ein mit dem Aufheizen der Einbaubohle assoziierter Parameter k(a) bestimmt werden. Der mit dem Aufheizen der Einbaubohle assoziierte Parameter kann auch als Aufheizparameter verstanden werden.

Nach Erreichen der Test-Temperatur kann auch in dieser Ausführungsform die Heizeinrichtung ausgeschaltet werden und die Einbaubohle entsprechend wieder abkühlen. Es kann auch vorgesehen sein, dass entsprechend der Ausführungsform der Fig. 3 dann im Schritt 304 der Abkühlparameter bestimmt wird. Ferner kann vorgesehen sein, dass sowohl Abkühlparameter als auch Aufheizparameter im Schritt 305 zum Erlangen der Startzeit genutzt werden. Beispielsweise kann der Mittelwert aus dem bestimmten Abkühlparameter und dem bestimmten Aufheizparameter genutzt werden, um die Startzeit zu erlangen 305.

## Patentansprüche

1. Verfahren (200) zum Aufheizen einer Einbaubohle (110) eines Straßenfertigers (100), das Verfahren umfassend:
- Erlangen (201) einer vorgegebenen Zeit zur Inbetriebnahme der Einbaubohle;
- Erlangen (202) einer Startzeit zum Beginnen des Aufheizens der Einbaubohle basierend auf der vorgegebenen Zeit;
- Automatisches Aufheizen (205) der Einbaubohle (110) durch Energiezufuhr zu einer Heizeinrichtung (112) der Einbaubohle von einer Energiequelle (141) ab der Startzeit.

2. Verfahren nach Anspruch 1, wobei die Energiequelle ein mit einem Primärantrieb (140) des Straßenfertigers (100) verbundener Akkumulator oder eine mit dem Primärantrieb (140) des Straßenfertigers (100) verbundene Brennstoffzelle oder der Primärantrieb (140) des Straßenfertigers (100) oder eine mit dem Straßenfertiger (100) verbundene, externe Energiequelle ist oder diese umfasst.

3. Verfahren nach Anspruch 1 oder 2, wobei das Erlangen (202) der Startzeit weiterhin basierend auf einem gemessenen Umweltparameter (221) erfolgt.

4. Verfahren nach Anspruch 3, wobei der Umweltparameter wenigstens eines von Umgebungstemperatur, Luftfeuchtigkeit, Niederschlagsmenge pro Zeiteinheit, Helligkeit umfasst.

5. Verfahren nach einem der Ansprüche 1 bis 4, wobei das Erlangen (305) der Startzeit weiterhin basierend auf einem gemessenen Abkühlparameter und/oder einem gemessenen Aufheizparameter der Einbaubohle (110) erfolgt.

6. Verfahren nach Anspruch 5, wobei der gemessene Abkühlparameter durch Aufheizen (302) der Einbaubohle (110) auf eine vorgegebene Test-Temperatur und anschließendes Ermitteln (304) eines mit einem Abkühlen der Einbaubohle assoziierten Parameters ermittelt wird und/oder wobei der gemessene Aufheizparameter durch Aufheizen (302) der Einbaubohle (110) auf eine vorgegebene Test-Temperatur und anschließendes Ermitteln eines mit dem Aufheizen der Einbaubohle assoziierten Parameters ermittelt wird.

7. Verfahren nach einem der Ansprüche 1 bis 6, wobei das automatische (205) Aufheizen von einer Steuereinheit (180) der Einbaubohle (110) nur dann aktiviert wird, wenn die Steuereinheit ein für ein Positionieren eines Sicherheitselements (130) indikatives Signal empfängt.

8. Verfahren nach Anspruch 7, wobei das Sicherheitselement (130) ein nicht brennbares Material und/oder ein wärmeisolierendes Material umfasst.

9. Verfahren nach einem der Ansprüche 1 bis 8, wobei das Erlangen (202) der vorgegebenen Zeit basierend auf einer Eingabe an einem Bedienelement (182) des Straßenfertigers (100) und/oder basierend auf einer Eingabe einer mit einer Steuereinheit (180) der Einbaubohle über eine drahtlose Verbindung verbundenen Eingabeeinrichtung erfolgt.

10. Straßenfertiger (100) umfassend eine Einbaubohle (110) und eine Steuereinheit (180), wobei die Einbaubohle und die Steuereinheit zur Ausführung eines Verfahrens zum Aufheizen der Einbaubohle ausgebildet sind, das Verfahren umfassend:
- Erlangen (201) einer vorgegebenen Zeit zur Inbetriebnahme der Einbaubohle;
- Erlangen (202) einer Startzeit zum Beginnen des Aufheizens der Einbaubohle basierend auf der vorgegebenen Zeit;
- Automatisches Aufheizen (205) der Einbaubohle durch Energiezufuhr zu einer Heizeinrichtung der Einbaubohle von einer Energiequelle ab der Startzeit.

11. Straßenfertiger (100) nach Anspruch 10, wobei die Energiequelle ein mit einem Primärantrieb (140) des Straßenfertigers (100) verbundener Akkumulator oder eine mit dem Primärantrieb (140) des Straßenfertigers (100) verbundene Brennstoffzelle oder der Primärantrieb (140) des Straßenfertigers (100) oder eine mit dem Straßenfertiger (100) verbundene, externe Energiequelle ist oder diese umfasst.

12. Straßenfertiger (100) nach Anspruch 10 oder 11, wobei der Straßenfertiger (100) einen Sensor (190) zum Messen eines Umweltparameters umfasst und wobei die Steuereinheit (180) ausgebildet ist, die Startzeit basierend auf dem gemessenen Umweltparameter zu bestimmen.

13. Straßenfertiger (100) nach einem der Ansprüche 10 bis 12, wobei die Steuereinheit (180) ausgebildet ist, die Startzeit basierend auf einem in einem Speicher (181) der Steuereinheit gespeicherten Abkühlparameter der Einbaubohle (110) zu Bestimmen.

14. Straßenfertiger (100) nach einem der Ansprüche 10 bis 13, wobei die Steuereinheit (180) ausgebildet ist, das Aufheizen der Einbaubohle (110) nur dann zu aktivieren, wenn die Steuereinheit ein für ein Positionieren eines Sicherheitselements (130) indikatives Signal empfängt.

15. Straßenfertiger (100) nach Anspruch 14, wobei das Sicherheitselement (130) ein nicht brennbares Material und/oder ein wärmeisolierendes Material umfasst.
